## Europäisches Patentamt

## European Patent Office

## Office européen des brevets

(19)

(11) Veröffentlichungsnummer: **0 151 296**

**B1**

(12) **EUROPÄISCHE PATENTSCHRIFT**

(45) Veröffentlichungstag der Patentschrift:
06.03.89

(51) Int. Cl.⁴: **H 02 P 8/00**

(21) Anmeldenummer: 84115798.5

(22) Anmeldetag: 19.12.84

(54) Steuerschaltung für einen Schrittmotor.

(30) Priorität: 07.02.84 DE 3404127

(43) Veröffentlichungstag der Anmeldung:
14.08.85 Patentblatt 85/33

(45) Bekanntmachung des Hinweises auf die Patenterteilung:
06.03.89 Patentblatt 89/10

(84) Benannte Vertragsstaaten:
AT BE CH DE FR GB IT LI LU NL SE

(56) Entgegenhaltungen:
DE-A-2 447 673
DE-A-2 837 187
DE-A-3 036 908
GB-A-2 064 834

Proceedings 11th annual symposium incremental motion control systems and devices
B.C. Kuo: "Closed-loop control of a 3.6 floppy-disk drive PM-motor by back-EMF sensing", May 1982

(73) Patentinhaber: Gerhard Berger GmbH & Co. KG
Fabrik elektrischer Geräte, Breslauer Strasse 7,
D-7630 Lahr (DE)

(72) Erfinder: Richter, Ludwig, Schulstrasse 27, D-7831
Rheinhausen (DE)
Erfinder: Siefert, Werner, Bahnhofstrasse 33,
D-7831 Kippenheim (DE)
Erfinder: Kleis, Hans- Jörg, Im Egert 1, D-7630 Lahr
17 (DE)

(74) Vertreter: Schmitt, Hans, Dipl.- Ing.,
Dreikönigstrasse 13, D-7800 Freiburg (DE)

EP 0 151 296 B1

LIBER, STOCKHOLM 1989

**Beschreibung**

Die Erfindung betrifft eine Steuerschaltung für einen Schrittmotor, der wenigstens zwei Phasen und einen spannungsinduzierenden Rotor aufweist, wobei die Steuerschaltung zum selbstsynchronisierten Betrieb des Motors eine EMK-Erfassungschaltung, eine EMK-Auswahleinrichtung mit Analogschaltern zur Umschaltung auf unterschiedliche, den jeweiligen Phasen zugeordnete EMK-Spannungskurven, einen Null-Durchgangsdetektor zur Erzeugung von Steuersignalen beim Nulldurchgang von EMK-Spannungskurven sowie einen Zähler mit einer angeschlossenen logischen Schaltung zur Ansteuerung der einzelnen Phasenschaltstufen des Motors aufweist.

Bekannte Steuerschaltungen (vgl. Proceedings eleventh annual symposium incremental motion control systems and devices May 1982 "closedloop control of a 3,6° Floppy-Disk Drive PM-motor by back-EMF sensing" von B.C. Kuo, Champaign, II) für den selbstsynchronisierten Betrieb eines Schrittmotors ergeben u. a. den wesentlichen Vorteil, daß die vorhandene Motordynamik wesentlich besser ausgenutzt werden kann, wohingegen bei in einer offenen Steuerkette betriebenem Schrittmotor die Schrittfolge so gewählt werden muß, daß der Synchronismus zwischen Rotor- und Statorfeld mit Sicherheit nicht verloren geht. Diese Sicherheit bedeutet aber eine Minderung der Betriebsdynamik. Insbesondere bei Lastschwankungen muß ein ausreichender Sicherheitsabstand zur optimalen Hochlauf- bzw. Verzögerungssequenz eingehalten werden. In der Regel liegt die Maximalfrequenz, die der Schrittmotor in einer offenen Steuerkette erreicht, um ein Vielfaches (z. B. Faktor 8 bis 10) unterhalb der Frequenz, die der Motor aufgrund seiner Dynamik erreichen könnte. Dagegen wird beim selbstsynchronisierten Betrieb das Rotorfeld mit dem Statorfeld synchronisiert, wobei das Statorfeld in Abhängigkeit des Rotorfeldes bzw. der Rotorstellung weiterschaltet.

Aus der DE-A-2 447 673 kennt man zur Rotor-Positionserfassung die Auswertung der Motor-EMK. Es ist bekannt, daß im Signal der Motor-EMK alle Informationen enthalten sind, die zur genauen Erkennung der magnetischen Rotorstellung benötigt werden. Die EMK ist eine periodische Funktion mit der Periodendauer LP entsprechend der Rotorzahnteilung und hat im allgemeinen einen nahezu sinusförmigen Verlauf. Die EMK-Spannung und das Haltemoment jeder Motorphase sind phasengleich.

Zur Erzeugung eines umlaufenden Statorfeldes müssen die Motorphasen zyklisch umgeschaltet werden, damit zu jedem Zeitpunkt das abgegebene Motormoment das gleiche Vorzeichen behält. Dies kann mit Hilfe der EMK-Spannungen erfolgen, wobei deren Nulldurchgang jeweils zum Umschalten herangezogen wird. Man unterscheidet bei der EMK-Erfassung die sogenannten direkte Methode (Proceedings Twelfth Annual Symposium incremental motion control systems and devices June 1983 "Direct detection of back-EMF in permanent- magnet step motors" von D. Hair, ed. B.C. Kuo, Champaign, II) und die indirekte Methode (Proceedings eleventh annual symposium incremental motion control systems and devices May 1982 "closes loop control of a 3,6° Floppy-Disk Drive PM-motor by back-EMF sensing" von C.C. Kuo, Champaign, II). Bei der direkten Methode, bei der die Spannung über einer Motorwicklung gemessen wird, ist insbesondere nachteilig, daß eine sichere Erkennung des Nulldurchganges nur bei geringen Motorfrequenzen möglich ist und daß darüber hinaus eine Einschränkung des dynamischen Motormomentes vorhanden ist.

Bei der indirekten Methode werden die vorgenannten Nachteile vermieden. Die Phasen-EMK wird dabei aus einer analogen Phasennachbildung gemäß der Gleichung $U_{EMK} = iR + L\frac{di}{dt} - u$

gewonnen.

Bei bisher bekannten Regelschaltungen mit EMK-Erfassung wird eine Zuordnung von einzelnen EMK-Kurven zu dem jeweiligen Erregungszustand getroffen. Die EMK-Auswahleinrichtung schaltet dabei kontinuierlich nach jedem Puls weiter, wobei sich bei Bezeichnung der EMK-Kurven mit 1 und 2 bzw. -1 und -2 z. B. eine Folge +1 , +2, -1, -2, +1... usw. ergibt. Soll nun der dynamische Lastwinkel verändert werden, so kann in bekannter Weise der Erregungszustand durch sogenannte Pulsinjektion verändert werden. Dies bedeutet jedoch eine schlagartige Änderung des Schaltwinkels um einen ganzen Schritt. Mit dem Schaltpuls, der sonst an dieser Stelle gesetzt wird, würde sich eine Änderung des dynamischen Lastwinkels um zwei Vollschritte ergeben. Die daraus resultierenden starken Momenten-Änderungen können zu Störungen führen bzw. die Effektivität der Schaltung mindern. Es ist deshalb auch schon für einen weicheren Übergang eine Zeitverzögerung für den Schaltpuls vorgesehen worden, die jedoch den schaltungstechnischen Aufwand weiter erhöht. Problematisch ist diese Zeitverzögerung insbesondere auch dann, wenn sich die Motorfrequenz (Drehzahl) ändert, weil dann entsprechend auch die Zeitverzögerung kontinuierlich genau mitverändert werden muß. Bei der vorerwähnten Pulsinjektion wird durch einen Zusatzimpuls ein EMK-Nulldurchgang simuliert, so daß entsprechend diesem Impuls früher auf einen nächsten Erregungszustand umgeschaltet wird. Um zu vermeiden, daß der zulässige Lastwinkel dabei überschritten wird, kann dieser Zusatzimpuls durch die Zeitverzögerung verzögert werden.

Bei Verwendung von "Pulsinjektion" ist auch dafür Sorge zu tragen, daß der bzw. die zusätzlichen Impulse während eines Verfahrzyklus zur exakten Ausführung einer vorgegebenen Schrittzahl mitberücksichtigt werden, um Positionierfehler zu vermeiden.

Aufgabe der vorliegenden Erfindung ist es, eine Steuerschaltung der eingangs erwähnten Art zu schaffen, die bei insgesamt vergleichsweise geringem, insbesondere schaltungstechnischem Aufwand auch im Falle, wenn mit maximal möglichem Moment beschleunigt oder verzögert werden soll, eine feine Regelung des dynamischen Motormomentes ermöglicht. Dabei soll auch eine höhere Funktionssicherheit erreicht und insbesondere sollen Schrittfehler sicher vermieden werden.

Zu Lösung dieser Aufgabe wird vorgeschlagen, daß die EMK-Auswahleinrichtung zum wahlweisen einzelnen oder kombinierten Durchschalten der EMK-Spannungen von der EMK-Erfassungsschaltung zu einem Summierer ausgebildet ist und daß der Summierer zwischen den Ausgängen der EMK-Auswahleinrichtung und dem Nulldurchgangsdetektor zur Bildung von Summen bzw. Differenzkurven aus den einzelnen EMK-Spannungskurven geschaltet ist, so daß sowohl an Halbschrittpositionen als auch an Vollschrittpositionen des Rotors Steuersignale gebildet werden und zur Optimierung des Motormomentes von der Ansteuerschaltung auswertbar sind.

Somit ist die Möglichkeit gegeben, nicht nur wie bisher aus den EMK-Signalen Vollschrittpositionen anhand der Nulldurchgänge der EMK-Kurven zu erkennen, sondern insbesondere durch den Summierer können nun aus den EMK-Summen- bzw. Differenzkurven auch Halbschrittpositionen erkannt werden. Dadurch ist bei geringem Aufwand eine feine Regelung möglich, wobei eine Pulszeitverzögerung hier nicht erforderlich ist.

Darüber hinaus stehen praktisch ohne zusätzlichen Aufwand auch bei der Endposition über die Nulldurchgänge einer EMK-Summen- bzw. Differenzkurve sowohl der Zeitpunkt des Erreichens der Position als auch der Zeitpunkt des ersten Überschwingmaximums für gezielte Dämpfungsmaßnahmen zur Verfügung.

Zur indirekten EMK-Erfassung, wobei ein der Gleichung

$$U_{EMK} = iR + L\frac{di}{dt} - U$$

entsprechendes Netzwerk als Erfassungsschaltung verwendet wird, wird nach einer Weiterbildung der Erfindung eine Steuerschaltung mit einer EMK-Erfassung vorgeschlagen, bestehend aus einem in Reihe mit jeder Motorphasen-Wicklung geschalteten Widerstand zur Erfassung des Phasenstromes und einer analogen Rechenschaltung mit nur einem Operationsverstärker, wobei zwischen Wicklung und Vorwiderstand ein zum ersten Eingang des Operationsverstärkers führender Spannungsmeß-Pfad zur Erfassung des Ohm'schen Spannungsabfalls und außerdem ein differenzierender Pfad zur Erfassung des induktiven Spannungsabfalles angeschlossen sind, und wobei zwischen dem vom Vorwiderstand abgewandten Ende der Motorphasen-Wicklung und dem anderen Eingang des Operationsverstärkers ein Spannungsmeß-Pfad zur Erfassung der Motorspannung angeschlossen ist.

Bei dieser Rechenschaltung ist der Aufwand sehr gering und es treten paktisch keine das Meßergebnis verfälschenden Fehler auf. Somit hat man trotz geringem Aufwand günstige elektrische Eigenschaften und damit auch eine entsprechende Ausgangsgröße zur Verfügung, durch die ein unproblematischer, funktionssicherer Betrieb möglich ist.

Nach einer Weiterbildung der Erfindung ist eine Dämpfungsschaltung mit einem durch eine Kombination von EMK-Spannungskurven ein- und ausschaltbarer Integrator zur Erfassung einer dem Energieinhalt des Rotors proportionalen Größe vorgesehen, wobei diese Größe zur Einschaltung einer proportionalen Dämpfung dient, wobei der Integrator durch die Nulldurchgänge der EMK-Spannung bzw. der EMK-Summenspannung durch die Rotorendpositions-Achse ein- und ausschaltbar ist und wobei der Integratorinhalt ein proportionales Maß für den Energiegehalt des Rotors bei der ersten Überschwingamplitude ist und wobei entsprechend dem Integratorinhalt nach dem ersten Überschwingen über die Rotorendlage zum Zeitpunkt der größten Überschwingamplitude eine Dämpfung, vorzugsweise durch Einschalten des auf die Endposition folgenden, in Weiterdrehrichtung und somit entgegen der Rückschwingrichtung wirkenden Erregungszustandes während einer dem Integratorinhalt proportionalen Zeit vorgesehen ist.

Somit kann die dem Rotorenergieinhalt proportionale Größe für gezielte Dämpfungsmaßnahmen verwendet werden. Vorzugsweise ist dabei vorgesehen, daß die Dämpfungsschaltung Steuereingänge aufweist, einerseits zur Erfassung des vom Summierer gebildeten, in Phase mit dem Haltemoment liegenden EMK-Signales und andererseits zur Erkennung der letzten Erregungszustands-Umschaltung innerhalb eines Verfahrzyklus und wobei ein Steuerausgang mit der logischen Schaltung bzw. dem PROM verbunden ist zur Weiterschaltung des Erregungszustandes auf einen dem letzten Erregungszustand eines Verfahrzyklus folgenden Erregungszustand. Durch die Möglichkeit der Bildung von Summen- bwz. Differenz-EMK-Signalen kann der Haltemomentkurve eine phasengleiche EMK-Kurve zugeordnet werden. Die Nulldurchgänge dieser EMK-Kurve einerseits beim Überschreiten der Endposition des Motorrotors und andererseits bei seinem ersten Überschwingmaximum, bilden genau definierte und durch die erfindungsgemäße Schaltung auch erfaßbare Meßpunkte. Zusätzlich steht außer der Information über die Rotorposition auch die Information über den Energieinhalt des Rotors zur Verfügung.

Zweckmäßigerweise ist der Integrator durch die Nulldurchgänge der EMK-Spannung bzw. der EMK-Summenspannung durch die Rotorendpositions-Achse ein- und ausschaltbar, wobei der Integratorinhalt ein proportionales Maß für den Energiegehalt des Rotors und dgl. bei der ersten Überschwingamplitude ist. Eine dem Energiegehalt der ersten Überschwingamplitude entsprechende Größe erhält man durch einfache Integration mit den beiden EMK-Signal-Nulldurchgängen als Integrationsgrenzen so daß aufgrund dieser erfaßbaren Größe gezielte Dämpfungsmaßnahmen ergriffen werden können.

Aus der DE-OS-2 161 112 ist bereits ein Schrittmotor-Dämpfungsverfahren und eine Anordnung bekannt. Hierbei wird jedoch eine Motorphase zur direkten Messung der EMK-Spannung und zur Einspeisung eines für die Dämpfung notwendigen Stromes benötigt. In nachteiliger Weise kann dabei nur eine Motorphase, niemals jedoch zwei Motorphasen gleichzeitig erregt werden.

Weiterhin ist aus der DE-OS-1 763 055 eine Bremsvorrichtung für einen Elektro-Schrittmotor bekannt, bei dem ein fotoelektrischer Geber zur Erkennung der Zielposition verwendet wird. Es handelt sich hierbei jedoch nicht um eine aktive Dämpfung, da hierbei die Dämpfung nur durch Kurzschließen der Motorwicklung über einen Kondensator verbessert werden soll. Dieser Kondensator muß aber auf die Induktivität und die Eigenschwingfrequenz des Antriebes genau abgestimmt sein. Trotz eines vergleichsweise hohen Aufwandes läßt sich mit dieser Anordnung nicht das gute Dämpfungsergebnis wie bei der vorliegenden Erfindung erzielen.

Zusätzliche Ausgestaltungen der Erfindung sind in den weiteren abhängigen Ansprüchen aufgeführt. Nachstehend ist die Erfindung anhand der Zeichnung erläutert.

Es zeigt:

Fig. 1 ein Blockschaltbild einer Steuerschaltung für einen Schrittmotor,

Fig. 2 eine schematische Darstellung eines Rotors und eines Stators eines Zweiphasen-Schrittmotors,

Fig. 3 die Kurvenverläufe von Motormomenten und zugehörigen EMK-Spannungen,

Fig. 4 ein vereinfachtes Blockschaltbild eines selbstsynchron betriebenen Schrittmotors,

Fig. 5 und 6 Ausführungsformen von Schaltungen zur EMK-Erfassung,

Fig. 7 einen Verfahrzyklus eines Schrittmotors,

Fig. 8 den zeitlichen Verlauf der Momentenkurve mit EMK-Spannungskurven bei niedrigen Drehzahlen und hoher Momentabgabe,

Fig. 9 eine etwa Fig. 8 entsprechende Darstellung, hier jedoch mit dem Kurvenverlauf bzw. den Übergängen bei niedrigen, mittleren und hohen Drehzahlen und jeweils maximaler Momentabgabe,

Fig. 10 den Kurvenverlauf des Motormomentes mit EMK-Spannungskurven beim Übergang von hohen Drehzahlen und maximaler positiver Momentabgabe zu maximal negativer Momentabgabe,

Fig. 11 den Kurvenverlauf des Motormomentes bei jeweils maximaler negativer Momentenabgabe bei hoher Geschwindigkeit, bei mittlerer Geschwindigkeit und bei niedriger Geschwindigkeit,

Fig. 12 und 13 unterschiedliche Übergangsphasen von positiver auf negative Momentenabgabe,

Fig. 14 den Kurvenverlauf des Motorhaltemomentes mit phasengleicher EMK-Spannungskurve im Bereich der Endpositionier-Stellung,

Fig. 15 den Kurvenverlauf der Rotorposition sowie der zugehörigen EMK-Spannungskurve während des Ausschwingvorganges und

Fig. 16 ein etwa Fig. 15 entsprechendes Diagramm, hier jedoch mit zusätzlichem Kurvenverlauf der Rotorposition bei aktiven Dämpfung.

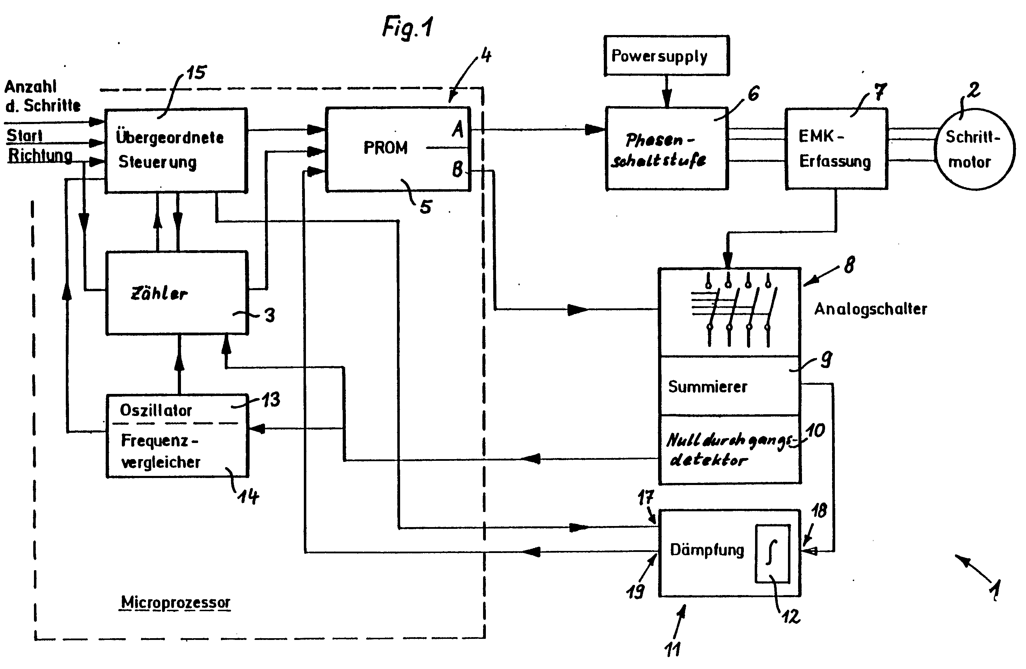

Eine in Fig. 1 schematisch anhand eines Blockschaltbildes gezeigte Steuerschaltung 1 dient zur Ansteuerung eines Schrittmotors 2. Der Schrittmotor 2 wird hier selbstsynchronisiert in einem Regelkreis betrieben, wobei das Statorfeld des Motors in Abhängigkeit von der Rotorposition weitergeschaltet wird. Dadurch wird ein solcher Schrittmotor 2 in seinem dynamischen Verhalten etwa einem Gleichstrommotor gleich.

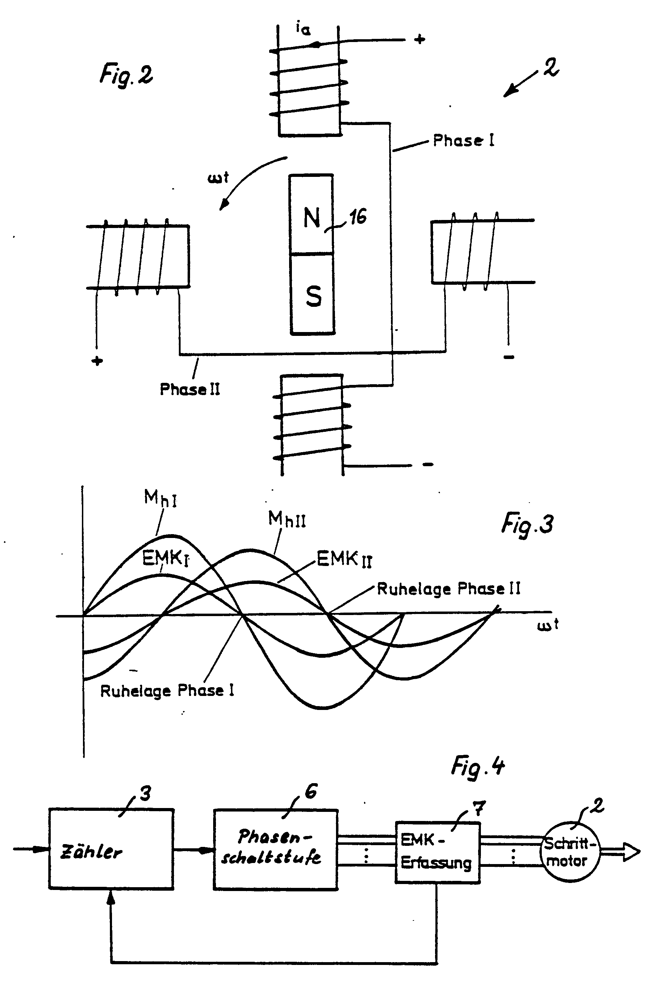

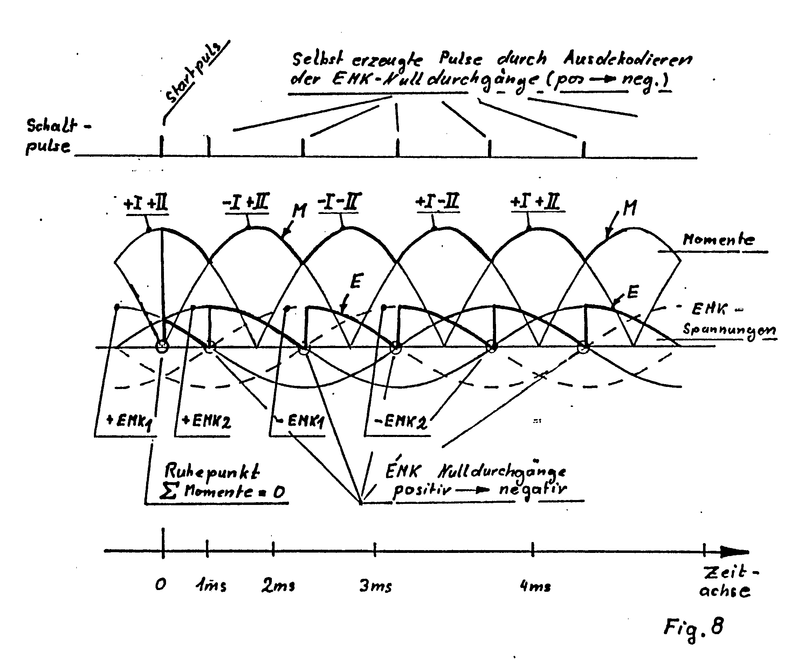

Im wesentlichen ist eine Ansteuerschaltung mit einem Zähler 3, einer angeschlossenen logischen Schaltung 4, die hier als PROM 5 ausgebildet ist, sowie eine Phasenschaltstufe 6 vorgesehen. Weiterhin ist in einer Regelkreis-Rückführung eine EMK-Erfassung 7, eine EMK-Auswahleinrichtung 8 mit einem angeschlossenen Summierer 9 sowie ein Impulsformer 10 angeordnet. Außerdem ist noch ein eine Dämpfungsschaltung 11 mit Integrator 12 enthaltender Block, ein Oszillator 13 und ein Frequenzvergleicher 14 in einem weiteren Block und schließlich ein Block für eine übergeordnete Steuerung 15 erkennbar. Anhand der Fig. 2 bis 4 sei kurz die Arbeitsweise eines Schrittmotors bzw. der Betrieb in einem selbstsynchronen Regelkreis erläutert. Fig. 2 zeigt in schematischer Darstellung einen Zweiphasen-Schrittmotor mit einer ersten Phase 5 und einer zweiten Phase II. Der Schrittmotor weist einen permanentmagnetischen Rotor 16 auf. In Fig. 3 sind die Motormomente $M_h$I sowie $M_h$II und die zugehörigen EMK-Spannungskurven dargestellt. Gut zu erkennen ist hier, daß die EMK-Spannungen ebenso wie die Haltemomente einen etwa sinusförmigen Verlauf haben und phasengleich sind. Die Motorphasen müssen jeweils im Nulldurchgang der Motor-EMK-Spannungen umgeschaltet werden, damit zu jedem Zeitpunkt das abgegebene Motormoment das gleiche Vorzeichen behält. Der Lastwinkel einer Phase (elektrischer Phasenwinkel zwischen tatsächlicher Rotorstellung und der stabilen Ruhelage, beträgt somit 180° el. Bei einem Zwei-Phasen-Motor entspricht dies zwei Motorschritten bzw. Vollschritten. Bei dem Blockschaltbild gemäß Fig. 4 wird der Schrittmotor 2 selbstsynchron betrieben. Dabei wird die Stellung des Rotors 16 über die EMK-Spannung erfaßt und dann eine Rückmeldung an die Sequenzschaltung 3 gegeben, wenn ein Nulldurchgang der EMK-Spannung erfolgt. Erst dann wird durch die Sequenzschaltung auf einen nächst folgenden Erregungszustand der Phasen weitergeschaltet. Fig. 8 zeigt einen Drehmomentverlauf eines Zwei-Phasen-Motors bei zwei gleichzeitig erregten Phasen I und II, wenn die Weiterschaltung jeweils im Nulldurchgang der EMK-Spannung erfolgt. Die Betrachtung bezieht sich auf quasistationäre Vorgänge, d. h. bei unendlich kleiner Rotorgeschwindigkeit oder bei vernachlässigbarer elektrischer Motorzeitkonstanten. Es sind hier die vier Erregungszustände +I+II -I+II -I-II +I-II usw., die EMK-Spannungen 1, 2 beider Phasen sowie deren Umkehrfunktionen -1, -2 dargestellt. Gut zu erkennen ist hierbei, daß jeweils für die Umschaltung auf den nächsten Erregungszustand nacheinander die EMK-Spannungen 1, 2, -1, -2 mit ihren Null durchgängen von positiv nach negativ verwendet werden. Nach Durchlauf der bei dem betrachteten Zwei-Phasen-Motor für eine Umdrehung vorhandenen vier Erregungszustände erfolgt zyklisch in gleicher Folge ein nächster Durchlauf. Entsprechendes gilt für die zur Umschaltung jeweils herangezogenen EMK-Spannungen.

Anhand des Blockschaltbildes gemäß Fig. 1 wird nachfolgend ein Regelkreisdurchlauf beschrieben. Zum besseren Verständnis sind die wesentlichen Funktionen der einzelnen Blöcke 3 bis 15 kurz beschrieben.

Zähler 3: Dieser kann aus einem Modulo 4 Vor-Rückwärtszähler (Ringzähler) bestehen, der nacheinander das PROM 5 zum Weiterschalten auf einen nächsten Erregungszustand ansteuert.

Logische Schaltung 4 bzw. PROM 5: Im PROM ist der Zusammenhang zwischen den Bestromungszuständen (Erregungszuständen) des Motors und der EMK-Auswahl für die verschiedenen Betriebszustände abgelegt. Im vorliegenden Falle eines Zwei-Phasen-Motors sind somit vier Erregungszustände sowie acht EMK-Kurven abgelegt.

Phasenschaltstufe 6: Diese weist Motortreiberstufen auf, mittels denen die Motorspulen nach dem jeweils gewünschten Erregungszustand bestromt werden.

EMK-Erfassung 7: Die EMK-Spannungen enthalten die Informationen über Position und Geschwindigkeit des Rotors. Sie werden über die EMK-Erfassung 7 gemessen und zwar jede Phase getrennt. Zusätzlich werden die gewonnenen Signale negiert, so daß bei einem Zwei-Phasen-Motor vier Ausgangssignale als EMK-Spannungskurven zur Verfügung stehen.

EMK-Auswahleinrichtung: Diese weist im wesentlichen vier Analogschalter zum Durchschalten von einem oder mehreren der von der EMK-Erfassung 7 kommenden vier Ausgangssignalen auf. Die Ansteuerung erfolgt von dem PROM 5.

Summierer 9: Hier können sowohl Summen als auch Differenzsignale aus EMK-Spannungskurven gebildet werden.

Impulsformer 10: Dieser weist im wesentlichen einen Komparator auf, der den jeweiligen Nulldurchgang des vom Summierer kommenden EMK-Signales von positiv nach negativ dekodiert. Bei diesem Nulldurchgang wird ein Puls an die Motor-Sequenz-Schaltung (Zähler 3) weitergegeben.

Dämpfung 11 mit Integrator 12: Hier erfolgt eine Erkennung der momentanen Motorposition und ein Auswerten der Überschwingamplitude über die Endpositionierstellung.

Oszillator 13, Frequenzvergleicher 14: Beim Bremsvorgang wird die Motorfrequenz mit einer fest vorgegebenen Frequenz verglichen und beim Unterschreiten dieser Frequenz wird vom selbstsynchronen (closed loop) Betrieb in den gesteuerten Betrieb umgeschaltet. Der Oszillator 13 erzeugt dann die Frequenz, mit der der Motor die verbleibenden Schritte zur Gesamtschrittzahl zurücklegt, wobei diese Frequenz kleiner ist als die maximale Stopfrequenz.

Übergeordnete Steuerung 15: Hier erfolgt die Ausgabe des Startpulses, Zählen der Motorschritte und Vergleich mit der Gesamtschrittzahl, Berechnung des Bremspunktes, Umschaltung vom closed loop-Betrieb auf gesteuerten Betrieb beim Bremsvorgang. Außerdem wird von dieser übergeordneten Steuerung 15 das PROM 5 für die verschiedenen Betriebszustände des Motors - Beschleunigen, Bremsen, konstante Frequenz, Dämpfen bei Rechts- und Linkslauf - adressiert.

Für den vorgesehenen Regelkreis-Durchlauf wird zunächst davon ausgegangen, daß sich der Motor bereits kontinuierlich im selbstsynchronen Betrieb dreht. Als Einstieg in den Kreis werden die Ausgänge A des PROM's 5 betrachtet. Sie liefern die Information, welchen Erregungszustand die Motorphasen einnehmen sollen und geben diese an die Phasenschaltstufe 6 mit ihren Motortreiberstufen weiter. Aufgrund der EMK-Spannungen werden die Phasenströme moduliert. Mit Hilfe der EMK-Erfassung werden die EMK-Spannungen jeder einzelnen Phase erfaßt. Somit stehen zunächst zwei EMK-Spannungsverläufe zur Verfügung. Diese werden jeweils negiert, so daß insgesamt vier EMK-Signale bei der EMK-Auswahleinrichtung anstehen. Durch die EMK-Auswahleinrichtung 8 kann dann durch die Analogschalter eine oder in Kombination auch mehrere dieser EMK-Spannungen durchgeschaltet werden. Bei Kombination von zwei EMK-Spannungen hat man einschließlich der vier Einzel-EMK-Spannungen dann acht Variationsmöglichkeiten zur Verfügung. Welches EMK-Signal oder welche EMK-Signale an den Summierer 9 weitergegeben werden, hängt von der Information des PROM-Ausganges B ab. Die Informationen an den PROM-Ausgängen A und B stehen für die weitere Betrachtung zunächst in fester Zuordnung. Die acht vorgenannten EMK-Spannungskurven sind nachfolgend mit 1, 2, -1, -2, 1 2, 2-1, -1-2, -2 1 bezeichnet. Die entsprechenden Kurven stehen nach dem Summierer - bei entsprechender Stellung der Analogschalter der EMK-Auswahleinrichtung 8 - zur Verfügung. Der nachfolgende Impulsformer 10 dekodiert mit seinem Komparator den Nulldurchgang von positiv nach negativ an die Motorsequenz-Schaltung weiter. Dem Zählerstand dieses Zählers 3 entsprechend wird dann die Adresse des PROM's um eins erhöht. Dadurch wird der nächste Erregungszustand an den Ausgängen A (z. B. von +I+II nach -I+II - vgl. Fig. 8) und der nächste Schalterzustand für eine andere EMK-Auswahl (z. B. von 1 auf 2) angelegt. Der Motor hat somit einen Schritt ausgeführt. Der Regelkreis-Durchlauf beginnt dann von neuem.

Durch die Möglichkeit zur Bildung von Summen- bzw. Differenzkurven mit Hilfe des Summierers 9 können auch Positionen zwischen den Einzel-EMK-Nulldurchgängen ausdekodiert werden, so daß der Schaltwinkel auch in Halbschritten verändert werden kann.

Fig. 7 zeigt in einem Diagramm einen Verfahrzyklus, der mit der erfindungsgemäßen Steuerschaltung ausgeführt werden kann. Soll der Motor eine Positionierung von Punkt A nach Punkt B durchführen, so muß er beschleunigt und verzögert werden.

Aus den Teilzyklen ergeben sich die Aufgaben, die die Sequenzschaltung bzw. die Steuerschaltung durchführen muß. Der gesamte Verfahrzyklus ist in folgende Teilbereiche aufgeteilt:

1 Startmodus
2 Beschleunigung und konstante Geschwindigkeit
3 Umschaltung von Beschleunigungsmodus bzw. konstanter Geschwindigkeit auf Verzögerung
4 Verzögerung
5 Umschaltung auf Stop-Frequenz
6 Stop-Frequenz
7 aktives Dämpfen

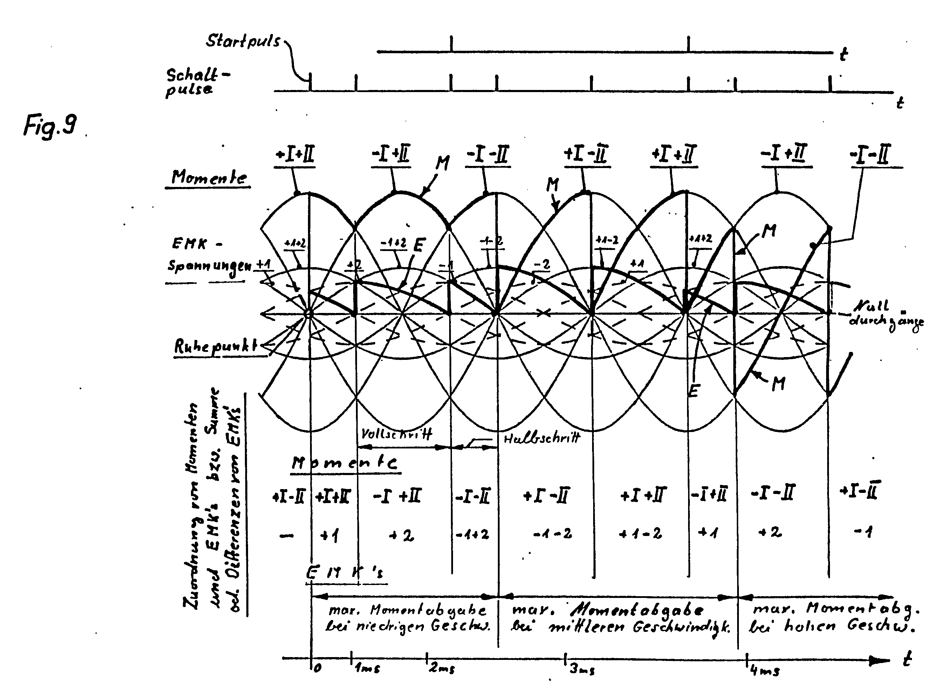

Die zu den einzelnen Abschnitten des Verfahrzyklus gehörenden Momentenkurven und EMK-Spannungskurven sind in den Figuren 8 bis 16 dargestellt. Fig. 8 zeigt die statische Betrachtung des Startvorganges. Um den Motor zu starten, ist ein manueller oder von einer externen Steuerung kommender Startimpuls erforderlich. Durch die übergeordnete Steuerung 15 werden dann Pulse erzeugt (mindestens ein Puls), die über den Zähler 3 den Erregungszustand des Motors 2 entsprechend weiterschalten. Dadurch wird ein positives Moment erzeugt, das den Rotor beschleunigt. Nach Vorgabe des Startimpulses werden alle weiteren Pulse von der Steuerschaltung selbst erzeugt. In den Figuren sind zur Verdeutlichung die jeweils wirksamen Momentenkurvenabschnitte M sowie die jeweils zugeordneten EMK-Spannungskurven-Abschnitte E durch größere Strichbreite hervorgehoben. In der in Fig. 8 und teilweise auch noch in Fig. 9 gezeigten Darstellung ist ein Schaltwinkel vorgesehen, bei dem maximales positives Moment bei niedrigen Drehzahlen abgegeben wird. Die Zuordnung von Erregungszustand (PROM-Ausgang A) zu Analogschalterstellung (PROM-Ausgang B) ist für diesen Schaltwinkel fest. Soll der Schaltwinkel geändert werden, z. B. um bei mittleren Geschwindigkeiten eine maximale Momentabgabe zu erzielen, so muß die Zuordnung Erregungszustand (z. B. -I+II) zur EMK-Auswahl (z. B. +2) geändert werden. Fig. 9 zeigt die Vergrößerung des Schaltwinkels in Halbschritten, wodurch eine hohe Funktionssicherheit erreicht wird und Schrittfehler praktisch nicht auftreten können. Die Vergrößerung des Schaltwinkels durch einen Halbschritt erfolgt durch eine andere Zuordnung einer EMK-Spannungskurve zu dem anstehenden Erregungszustand. Gemäß Fig. 9 folgt auf den Erregungszustand -I+II der Erregungszustand -I-II und die entsprechende Zuordnung einer EMK-Spannungskurve (vgl. Fig. 8) wäre bei gleichbleibendem Schaltwinkel EMK-Spannung +2 und EMK-Spannung -1. Gemäß Fig. 9 wird jedoch bei dem Erregungszustand -I-II auf die EMK-Spannung -1+2 umgeschaltet, so daß sich dementsprechend auch ein früherer Nulldurchgang dieser EMK-Spannung ergibt. Die nachfolgende Zuordnung von Erregungszuständen und EMK-Spannungen ist dann wieder so vorgesehen, daß sich Vollschritte ergeben.

Im weiteren Verlauf des in Fig. 9 gezeigten Diagrammes ist dann noch eine weitere Umschaltung auf einen anderen Schaltwinkel gegeben, bei dem eine maximale Momentabgabe bei hohen Geschwindigkeiten möglich ist. Dies geschieht wiederum durch entsprechende andere Zuordnung von Erregungszuständen und EMK-Spannungen.

Oberhalb des Diagrammes sind noch zwei Zeitachsen aufgetragen, in die entsprechend dem Diagramm die durch die EMK-Nulldurchgänge erzeugten Schaltimpulse einerseits und in der obersten Darstellung die zwei Impulse zum Umschalten auf andere Lastwinkel eingezeichnet sind. Die Umschaltimpulse bzw. die Zuordnung der PROM-Ausgänge B zu A werden von der übergeordneten Steuerung 15 gegeben. Wann diese Steuerbefehle gesetzt werden, hängt von den Motor- und Lastparametern sowie von der Frequenz ab. In dem PROM 5 sind alle Möglichkeiten der Zuordnung zwischen den bei dem hier betrachteten Motor vier Erregungszuständen sowie den acht EMK-Spannungskurven abgespeichert. Aus dem Vorgenannten ist erkennbar, daß für ein optimales Antriebsverhalten je nach Motorgeschwindigkeit die EMK-Auswahl in Abhängigkeit des Erregungszustandes geändert werden kann. Durch diese Maßnahme kann mit steigender Motorfrequenz der Einfluß der elektrischen Motorzeitkonstanten auf den dynamischen Lastwinkel angepaßt werden. Für geringere Motorfrequenzen und kleine Zeitkonstanten kann ein Lastwinkel nach Fig. 8 gewählt werden, d. h. zur Erkennung des Umschaltzeitpunktes kann der Nulldurchgang einer Einzel-EMK herangezogen werden. Für maximale Anfangsbeschleunigung erfolgt somit die Motoransteuerung nach dieser EMK-Auswahl. Mit steigender Motorfrequenz wird dann auf die EMK-Auswahl nach Fig. 9 umgeschaltet. Die Summen- und Differenzbildung von EMK-Spannungskurven erlaubt dabei die Vergrößerung bzw. Verkleinerung des dynamischen Lastwinkels in Halbschritten. Würde der dynamische Lastwinkel schlagartig um einen Vollschritt verändert, so könnte dies sonst zu Störungen führen. Der Beschleunigungsvorgang ist beendet, wenn Motormoment und Lastmoment im Gleichgewicht sind oder wenn die Motorfrequenz durch externe Maßnahmen begrenzt wird.

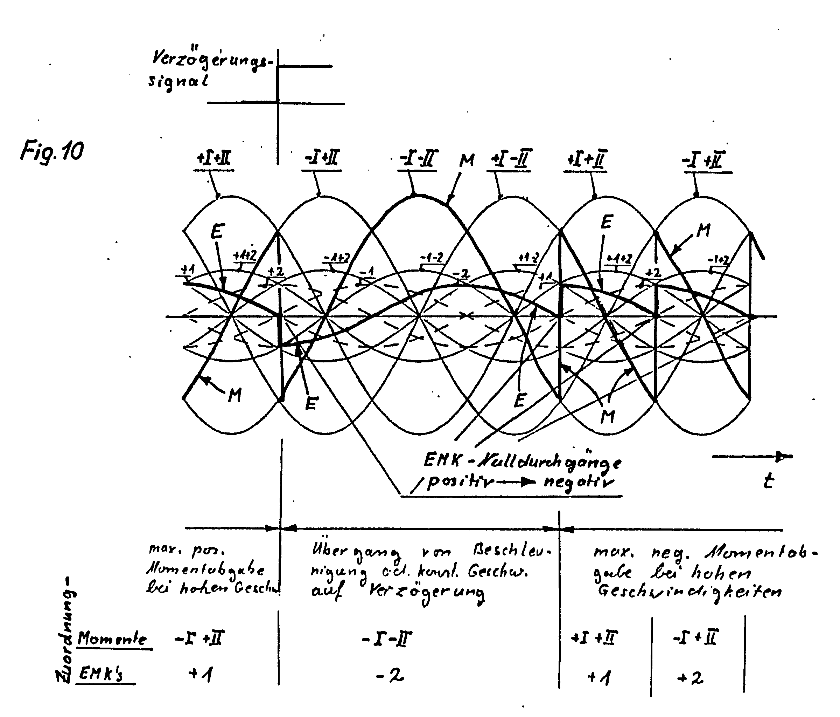

Zum Umschalten von Beschleunigung bzw. konstanter Geschwindigkeit auf Verzögerung bestehen zwei Möglichkeiten. Fig. 10 und 12 zeigen einen kontinuierlichen Übergang von Beschleunigung auf Verzögerung, was dadurch erreicht wird, daß nach dem Setzen des Verzögerungssignales dem momentanen Erregungszustand (Fig. 10 - -I-II) eine andere EMK - nämlich anstatt EMK +2, EMK -2 zugeordnet wird.

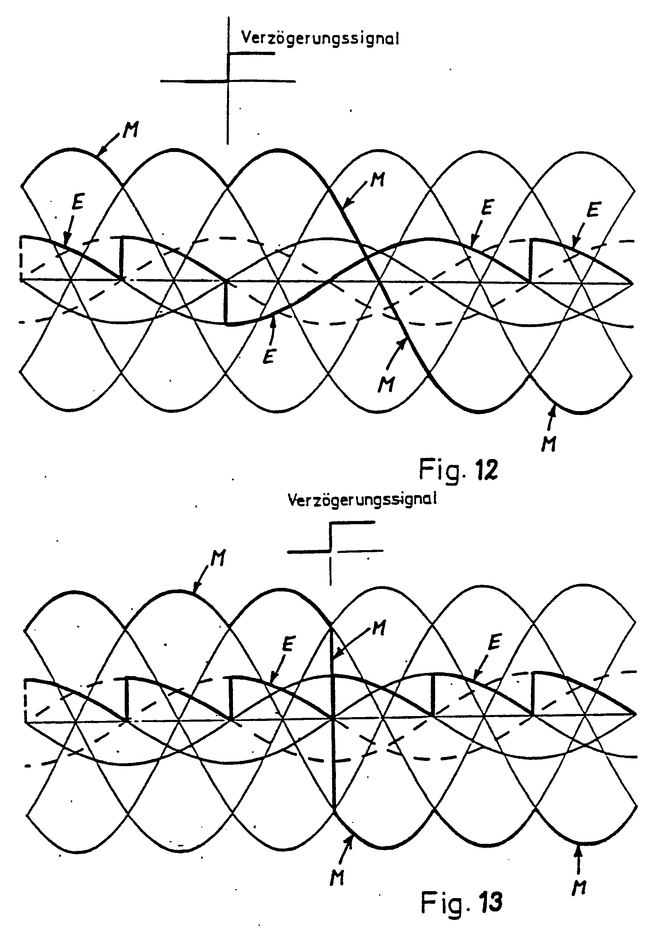

Eine andere Möglichkeit für eine dann schlagartige Umschaltung kann dadurch erreicht werden, daß der dem Verzögerungssignal folgenden EMK-Spannungskurve ein anderer Erregungszustand zugeordnet ist, wie dies in Fig. 13 gezeigt ist. Gut zu erkennen ist hier, daß die jeweils verwendeten EMK-Spannungskurven-Abschnitte kontinuierlich weiterlaufen. Beide Umschaltmöglichkeiten können mit der erfindungsgemäßen Steuerschaltung durchgeführt werden, da die wahlweisen Zuordnungen über die übergeordnete Steuerung 15 durch das PROM 5 vorgenommen werden können.

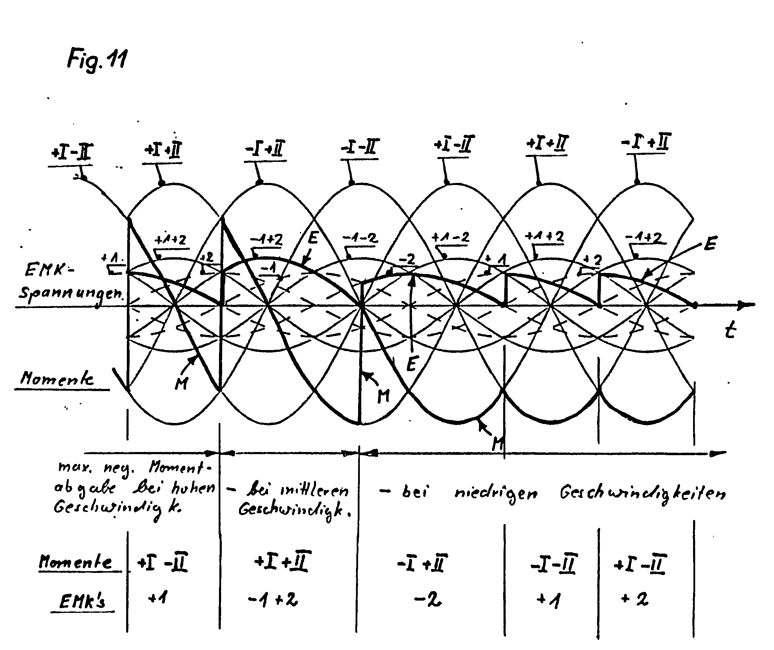

In Fig. 10 schließt sich an den Übergangsbereich von Beschleunigung auf Verzögerung ein Bereich an, bei dem eine maximale negative Momentenabgabe bei hohen Geschwindigkeiten zum Bremsen erkennbar ist. Die Zuordnung zwischen EMK und Erregungszustand ist im Verzögerungsmodus gegenüber dem Beschleunigungsmodus üblicherweise um 180° el. verschoben. In Fig. 11 schließen sich entsprechend Abschnitte mit Momentenkurven an, bei denen entsprechend der jeweiligen Motordrehzahl auf andere Momentenabschnitte durch entsprechend andere Zuordnung zwischen jeweiligem Erregungszustand und EMK getroffen wird. Es ist zu beachten, daß nach dem Verzögerungsmodus (4 in Fig. 7) die Schrittfrequenz kleiner bzw. gleich der Stop-Frequenz ist, aus der innerhalb eines Schrittes der Motor zum Stillstand kommen kann. Um dies auch bei schwankenden Lasten zu gewährleisten, muß die Bremsphase rechtzeitig eingeleitet werden. Damit der Antrieb dennoch seine gewünschte Endposition (B) erreicht, müssen bei Unterschreiten einer vorgegebenen Frequenz die restlichen Motorschritte mit einer konstanten Frequenz ausgeführt werden, die kleiner oder gleich der Stop-Frequenz ist. Dieser Abschnitt ist in Fig. 7 mit 6 bezeichnet. Um mit einem kontinuierlichen Übergang von Verzögerung mit maximalem Moment zu einer konstanten Frequenz unterhalb der Stop-Frequenz zu gelangen, muß der dynamische Lastwinkel variiert werden, was wiederum durch Zuordnung verschiedener EMK-Spannungen oder deren Summe bzw. Differenz möglich ist. Aufgrund der Stromanstiegszeitkonstanten wäre der Motor sonst nicht in der Lage, das hohe negative Moment schnell genug abzubauen.

Aus Fig. 1 ist ersichtlich, daß die Dämpfungsschaltung 11 zwei Steuereingänge 17 und 18 aufweist, wobei der Steuereingang 18 zur Erfassung des vom Summierer 9 gebildeten, in Phase mit dem Haltemoment liegenden EMK-Signales und der Steuereingang 17 zur Erkennung der letzten Erregungszustands-Umschaltung innerhalb eines Verfahrzyklus dienen. Weiterhin ist ein Steuerausgang mit Verbindung zu dem PROM 5 vorgesehen, mittels dem eine Weiterschaltung des Erregungszustandes auf einen dem letzten Erregungszustand eines Verfahrzyklus folgenden Erregungszustand vorgenommen werden kann.

Die phasengleiche Zuordnung von Motormoment und EMK ist ebenfalls durch die Möglichkeit gegeben, daß Summen bzw. Differenzen aus den vorhandenen EMK-Spannungskurven durch den Summierer 9 gebildet werden können. Es ergibt sich dadurch praktisch ohne weiteren Aufwand die Möglichkeit, gezielt Dämpfungsmaßnahmen zu treffen. Dazu kann aus dem Signalverlauf der Motor-EMK neben der Information über die Rotorposition auch die Information über den Energieinhalt des Rotors entnommen werden. Dies ist die Grundvoraussetzung für die Einleitung geregelter, aktiver Dämpfungsmaßnahmen. In Fig. 14 ist erkennbar, daß das Motorhaltemoment (+I+II) in Phase mit einer EMK-Spannungskurve (+1+2) liegt. Durch diese phasengleiche Zuordnung läßt sich aus den EMK-Nulldurchgängen direkt auf die Rotorposition schließen.

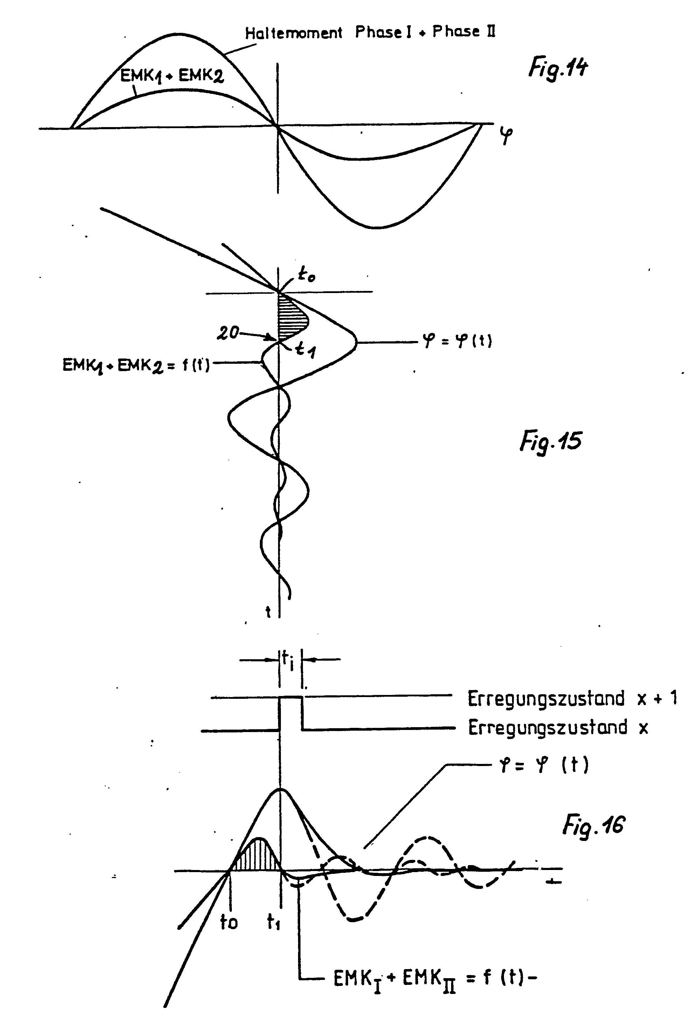

In Fig. 15 ist in einem Diagramm über einer Zeitachse t als Ordinate die Rotorposition als Abszisse aufgetragen. Die Zeitachse bildet gleichzeitig die Rotorendposition. Während des Ausschwingvorganges pendelt der Rotor um die stabile Ruhelage des Enderregungszustandes. Während des Ausschwingvorganges hat das EMK-Signal (+1+2) die doppelte Frequenz gegenüber der Schwingfrequenz des Rotors. Der erste Nulldurchgang im Kreuzungspunkt der Koordinaten entspricht der gewünschten Endstellung des Rotors. Beim nächsten Nulldurchgang des EMK-Signales bei 20 hat der Rotor sein erstes Oberschwingmaximum erreicht. Es ist hier gut erkennbar, daß einerseits über die Nulldurchgänge des EMK-Signales die Rotorposition erkennbar ist und daß andererseits auch über den zeitlichen Abstand zwischen erstem Nulldurchgang und dem Nulldurchgang bei 20 über eine einfache Integration des EMK-Signales auf die Rotorenergie geschlossen werden kann. Im weiteren Kurvenverlauf ist jeder zweite Nulldurchgang des EMK-Signales mit der Rotor-Endposition identisch, während die Nulldurchgänge dazwischen jeweils die Lage der Überschwingamplitude angeben. Durch die vorerwähnte Integration mit den beiden EMK-Signal-Nulldurchgängen als Integrationsgrenzen, kann eine Größe gewonnen werden, die dem Energiegehalt der ersten Überschwingamplitude proportional ist (vgl. schraffierten EMK-Kurvenabschnitt). Die daraus eingeleiteten Dämpfungsmaßnahmen können z. B. auch nach dem bekannten Prinzip des "back phase damping" erfolgen. In Fig. 16 ist der der Rotorstellung entsprechende Kurvenverlauf dargestellt, wenn gezielte Dämpfungsmaßnahmen ergriffen werden. Strichliniert ist der Kurvenverlauf etwa entsprechend Fig. 15 dargestellt. Zur Bildung einer Steuergröße für die gezielten Dämpfungsmaßnahmen weist die Dämpfungsschaltung 11 einen Integrator 12 auf. Der zwischen t0 und t1 aufintegrierte Integratorinhalt ist ein Maß dafür, für welchen Zeitabschnitt gedämpft werden soll. In Fig. 16 ist der Enderregungszustand mit X bezeichnet, während der nächstfolgende Erregungszustand, der ein Weiterdrehmoment erzeugt, mit X+1 bezeichnet ist. Bei Erreichen des ersten Oberschwingmaximums des Rotors wird die Dämpfung durch Umschalten auf den Erregungszustand X+1 für die Zeit $t_i$ eingeschaltet, wobei $t_i$ ein proportionales Maß zum Integratorinhalt darstellt. Durch diese gezielte Dämpfungsmaßnahme wird der Ausschwingvorgang wesentlich abgekürzt, wie dies aus der durchgezogenen, die Rotorstellung wiedergebenden Kurve erkennbar ist.

Die EMK-Erfassung 7 weist als Erfassungsschaltung ein Netzwerk entsprechend der Gleichung $U_{EMK} = iR + L\frac{di}{dt} - U$ auf.

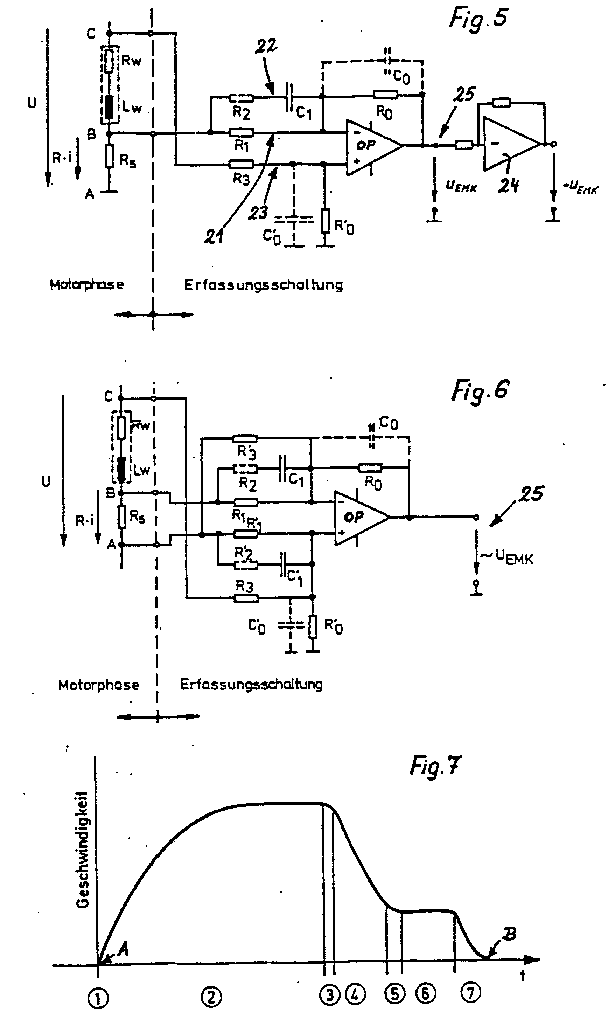

Im Ausführungsbeispiel gemäß den Fig. 5 und 6 ist dieses Netzwerk im wesentlichen durch eine analoge Rechenschaltung mit nur einem Operationsverstärker gebildet. Dieser ist als Addier- bzw. Subtrahierverstärker mit differenzierendem Pfad beschaltet. Er weist einen Spannungsmeßpfad 21 (iR), einen Differentiations-Pfad 22 mit Addition ($L\frac{di}{dt}$) sowie

einen Subtraktions-Pfad 23 (-U) auf. Für jede Motorphase ist eine solche Erfassungsschaltung vorgesehen. Die Erfassungsschaltung ist jeweils an eine Motorphase angeschlossen, wobei in Reihe mit jeder Motorphasen-Wicklung ($R_w$, $L_w$) ein Vorwiderstand $R_S$ geschaltet ist. Die Schaltung gemäß Fig. 5 zeigt eine besonders einfache Ausführungsform einer Erfassungsschaltung, wobei der Vorwiderstand einseitig an O-Potential gelegt ist. Dieser Meßpunkt ist mit A bezeichnet. Zwischen dem Vorwiderstand und der Motorphasen-Wicklung befindet sich der Meßpunkt B und am anderen Ende der Wicklung der Meßpunkt C. Diese Schaltung ist beispielsweise für unipolar betriebene Schrittmotoren mit bifilarer Wicklung geeignet. Über den Meßpfad 21, der an den Meßpunkt B angeschlossen ist, wird die über dem Vorwiderstand $R_S$ abfallende, dem Phasenstrom i proportionale Spannung ($R_S \cdot i$) gemessen. Über den Pfad 22 erfolgt eine Differentiation, bevor das Signal der Addition zugeführt wird. Der Pfad 23 führt die Eingangsspannung der Subtraktion zu.

Fig. 6 zeigt eine abgewandelte Ausführungsform einer Erfassungsschaltung, die hier als Differenzschaltung ausgeführt ist. Es ist hier keine feste Potentialbeziehung zwischen den Meßpunkten A, B, C und dem Nullpotential notwendig. Auch hier kommt man mit einem einzigen Operationsverstärker OP aus.

Die Dimensionierung der Bewertungswiderstände $R_1$, $R'_1$, $R_3$, $R_3'$, und der Kondensatoren $C_1$, $C'_1$ ist vom Verhältnis Vorwiderstand/Gesamtwiderstand und der Induktivität $L_w$ abhängig. Die Widerstände $R_2/R'_2$ und die Kapazitäten $C_0$, $C'_0$ dienen der Störunterdrückung und sind für die Funktion der Schaltung prinzipiell nicht notwendig. Sie sind deshalb strichliniert eingezeichnet.

Wie bereits in Verbindung mit Fig. 1 beschrieben, werden der EMK-Auswahleinrichtung 8 bei einem Zwei-Phasen-Motor vier EMK-Signale zugeführt. Dabei sind zwei Signale die den Motorphasen direkt zugeordneten EMK-Spannungen, während die anderen zwei Signale jeweils negierte bzw. um 180° phasenverschobene EMK-Spannungen sind. Man erreicht dies durch einen Inverter bzw. Umkehrverstärker 24, der am Ausgang 25 der einzelnen EMK-Erfassungsschaltung angeschlossen ist. Dies ist in Fig. 5 dargestellt. In gleicher Weise kann ein solcher Umkehrverstärker auch am Ausgang 25 der Erfassungsschaltung nach Fig. 6 angeschlossen sein.

Einschließlich der Inverter 24 kommt man bei einem Zwei-Phasen-Motor für die EMK-Erfassung mit vier Ausgangssignalen, mit einem einzigen integrierten Schaltkreis (4-fach Operationsverstärker) aus. Der Schaltungsaufwand und entsprechend auch der Platzbedarf sind dementsprechend gering. Erwähnt sei noch, daß grundsätzlich diese Erfassungsschaltung nicht auf Schrittmotoren begrenzt ist, sondern prinzipiell auch zur Erfassung jeder fremdinduzierten Spannung in einem induktiven Kreis verwendet werden könnte.

Die Beschreibung des Ausführungsbeispieles stützte sich im wesentlichen auf zwei-phasige hybride Schrittmotoren. Analoges gilt jedoch auch für mehrphasige Schrittmotoren und auch für die sogenannten Dosenmotoren. Die Endstufen können dabei sowohl als bipolare Schaltung (Brückenschaltung) als auch als unipolare Endstufe ausgebildet sein.

Schrittmotoren mit der erfindungsgemäßen Steuerschaltung können beispielsweise bei Typenrad-Antrieben bei Schreibmaschinen, Wagenantrieben bei Schreibautomaten für den schnellen Wagenrücklauf, für Schreib-/Lesekopfantriebe in Diskettenlaufwerken, bei Positionierantrieben, bei denen größere Wegstrecken möglichst schnell zurückgelegt werden sollen, für Spiegelverstellantriebe in optischen Geräten, für Plotterantriebe u. dgl. eingesetzt werden. Erwähnt sei noch, daß ein Großteil der Steuerschaltung 1 Inhalt eines Mikroprozessors sein kann, wie dies durch die strichlinierte Umrandung des Zählers 3, des PROM's 5, des Oszillators 13 mit Frequenzvergleicher 14 und der übergeordneten Steuerung 15 angedeutet ist. Gegebenenfalls können je nach "Kapazität" des Mikroprozessors auch noch weitere Funktionsgruppen der übrigen Steuerschaltung integriert sein.

## Patentansprüche

1. Steuerschaltung für einen Schrittmotor, der wenigstens zwei Phasen und einen spannungsinduzierenden Rotor aufweist, wobei die Steuerschaltung (1) zum selbstsynchronisierten Betrieb des Motors (2) eine EMK-Erfassungsschaltung (7), eine EMK-Auswahleinrichtung mit Analogschaltern (8) zur Umschaltung auf unterschiedliche, den jeweiligen Phasen zugeordnete EMK-Spannungs-Kurven, einen Nulldurchgangsdetektor (10) zur Erzeugung von Steuersignalen beim Nulldurchgang von EMK-Spannungskurven sowie einen Zähler (3) mit einer angeschlossenen logischen Schaltung (4) zur Ansteuerung der einzelnen Phasen-Schaltstufen (6) des Motors (2) aufweist, dadurch gekennzeichnet, daß die EMK-Auswahleinrichtung (8) zum wahlweise einzelnen oder kombinierten Durchschalten der EMK-Spannungen von der EMK-Erfassungschaltung (7) zu einem Summierer (9) ausgebildet ist und daß der Summierer (9) zwischen den Ausgängen der EMK-Auswahleinrichtung (8) und dem Nulldurchgangsdetektor (10) zur Bildung von Summen bzw. Differenzkurven aus den einzelnen EMK-Spannungs-Kurven geschaltet ist, so daß sowohl an Halbschrittpositionen als auch an Vollschrittpositionen des Rotors (16) Steuersignale gebildet werden und zur Optimierung des Motormomentes von der Ansteuerschaltung auswertbar sind.

2. Steuerschaltung nach Anspruch 1, dadurch gekennzeichnet, daß in der logischen Schaltung (4) mögliche Zuordnungen zwischen den Erregungszuständen der Phasenwicklungen und den Kombinationen der EMK-Spannungskurven abgespeichert sind, und daß die logische Schaltung (4) neben einer Verbindung (A) zu den Motortreiberstufen (6) einen Ausgang (B) zum Ansteuern der EMK-Auswahleinrichtung (8) sowie einen Steuereingang zur Auswahl einer Zuordnung aufweist.

3. Steuerschaltung nach Anspruch 2, dadurch gekennzeichnet, daß die logische Schaltung (4) als PROM (5) ausgebildet ist.

4. Steuerschaltung nach Anspruch 1, dadurch gekennzeichnet, daß die EMK-Erfassung ein der Gleichung $U_{EMK} = i \cdot R + L \frac{di}{dt} - U$ entsprechendes Netzwerk als Erfassungsschaltung aufweist, bestehend aus einem in Reihe geschalteten Vorwiderstand ($R_S$) zur Erfassung des Phasenstromes und einer analogen Rechenschaltung mit nur einem Operationsverstärker (OP), wobei zwischen Wicklung und Vorwiderstand (Anschluß B) ein zum ersten Eingang des Operationsverstärkers führender Spannungsmeß-Pfad (21) zur Erfassung des ohmschen Spannungsabfalls und außerdem ein differenzierender Pfad (22) zur Erfassung des induktiven Spannungsabfalls angeschlossen sind, und wobei zwischen dem vom Vorwiderstand ($R_S$) abgewandten Ende (Anschluß C) der Motorphasen-Wicklung und dem anderen Eingang des Operationsverstärkers ein Spannungsmeßpfad zur Erfassung der Motorspannung angeschlossen ist.

5. Steuerschaltung nach einem der Ansprüche 1 bis 4, dadurch gekennzeichnet, daß am Ausgang der Rechenschaltung für eine analoge EMK-Spannung ein Inverter oder Umkehrverstärker (24) zur Bildung einer EMK-Spannung mit gegenüber dem Eingangssignal negativem Vorzeichen angeschlossen ist.

6. Steuerschaltung nach einem der Ansprüce 1 bis 5, dadurch gekennzeichnet, daß die EMK-Erfassungseinrichtung (7) für jede Motorphase einen Ausgang für eine der Motorphase zugeordnete EMK-Spannung und einen weiteren Ausgang für eine negierte d.h. um 180° phasenverschobene EMK-Spannung aufweist und daß diese Ausgänge mit der EMK-Auswahleinrichtung (8) bzw. den Analogschaltern verbunden sind.

7. Steuerschaltung nach einem der Ansprüche 1 bis 6, dadurch gekennzeichnet, daß die analoge Rechenschaltung zur EMK-Erfassung als Differenzschaltung ohne feste Potentialbeziehung zwischen den Meßpfadanschlußstellen und dem Nullpotential ausgebildet ist.

8. Steuerschaltung nach einem der Ansprüche 1 bis 6, dadurch gekennzeichnet, daß die analoge Rechenschaltung zur EMK-Erfassung mit fester Potentialbeziehung zwischen den Meßpfadanschlußstellen und dem Nullpotential ausgebildet ist, wobei der Vorwiderstand ($R_S$) jeder Motorphasen-Wicklung einseitig am Nullpotential liegt.

9. Steuerschaltung nach einem der Ansprüche 1 bis 8, dadurch gekennzeichnet, daß der an den Summierer (9) angeschlossene Impulsformer (10) als Komparator ausgebildet ist.

10. Steuerschaltung nach einem der Ansprüche 1 bis 9, dadurch gekennzeichnet, daß eine Dämpfungsschaltung (11) mit einem durch eine Kombination von EMK-Spannungskurven ein- und ausschaltbaren Integrator (12) zur Erfassung einer dem Energieinhalt des Rotors (16) proportionalen Größe vorgesehen ist und daß diese Größe zur Einschaltung einer proportionalen Dämpfung dient, wobei der Integrator (12) durch die Nulldurchgänge der EMK-Spannung bzw. der EMK-Summenspannung durch die Rotorendpositions-Achse ein- und ausschaltbar ist und daß der Integratorinhalt ein proportionales Maß für den Energiegehalt des Rotors bei der ersten Überschwingamplitude ist und wobei entsprechend dem Integratorinhalt nach dem ersten Überschwingen über die Rotorendlage zum Zeitpunkt der größten Überschwingamplitude eine Dämpfung, vorzugsweise durch Einschalten des auf die Endposition folgenden, in Weiterdrehrichtung und somit entgegen der Rückschwingrichtung wirkenden Erregungszustandes während einer dem Integratorinhalt proportionalen Zeit vorgesehen ist.

11. Steuerschaltung nach Anspruch 10, dadurch gekennzeichnet, daß die Dämpfungsschaltung (11) Steuereingänge (18, 17) aufweist, einerseits zur Erfassung des vom Summierer (9) gebildeten, in Phase mit dem Haltemoment liegenden EMK-Signales und andererseits zur Erkennung der letzten Erregungszustands-Umschaltung innerhalb eines Verfahrzyklus und daß ein Steuerausgang (19) mit der logischen Schaltung (4) bzw. dem PROM (5) verbunden ist zur Weiterschaltung des Erregungszustandes auf einen dem letzten Erregungszustand eines Verfahrzyklus folgenden Erregungszustand.

## Claims

1. Control circuit for a stepping motor which has at least two phases and a voltage-inducing rotor, the control circuit (1) having, for self-synchronised operation of the motor (2), an EMF sensing circuit (7), an EMF selecting device with analog switches (8) for switching to different EMF voltage curves associated with the various phases, a zero-axis crossing detector (10) for generating control signals when EMF voltage curves cross the zero-axis and a counter (3) with a logic circuit (4) connected thereto for controlling the individual phase switch position (6) of the motor (2), characterised in that the EMF selecting device (8) is adapted to connect the EMF voltages from the EMF sensing circuit (7) to an integrator (9) either individually or in combination, as desired, and in that the integrator (9) is connected between the outputs of the EMF selecting device (8) and the zero-axis crossing detector (10) in order to produce sums or differential curves from the individual EMF voltage curves, so that control signals are provided both at half-step positions and at full-step positions of the rotor (16) and can be evaluated by the control circuit in order to optimise the momentum of the motor.

2. Control circuit as claimed in claim 1, characterised in that possible relationships between the states of excitation of the phase windings and the combinations of EMF voltage curves are stored in the logic circuit (4) and in that the logic circuit (4) has, in addition to a connection (A) with the motor driver stages (6), an output (B) for controlling the EMF selecting device (8) and a control input for selecting a relationship.

3. Control circuit as claimed in claim 2, characterised in that the logic circuit (4) comprises a PROM (5).

4. Control circuit as claimed in claim 1, characterised in that the EMF sensor has a network, corresponding to the equation $U_{EMF} = i \cdot R + L \frac{di}{dt} - U$ as the sensing circuit, consisting of a dropping resistor ($R_S$) connected in series for detecting the phase current and an analog computing circuit with only one operational amplifier (OP), whilst between the winding and the dropping resistor (junction B) is connected a voltage measuring circuit (21) leading to the first input of the operation amplifier for detecting the ohmic voltage drop and also a differentiating circuit (22) for detecting the inductive voltage drop, and between the end (junction C) of the motor phase winding remote from the dropping resistor ($R_S$) and the other input of the operation amplifier is connected a voltage measuring circuit for detecting the motor voltage.

5. Control circuit as claimed in one of claims 1 to 4, characterised in that, connected to the output of the computing circuit for an analog EMF voltage, is an inverter or phase-inverter amplifier (24) for forming a negative EMF voltage with respect to the input signal.

6. Control circuit as claimed in one of claims 1 to 5, characterised in that the EMF detecting device (7) for each motor phase has an output for an EMF voltage associated with the motor phase and another output for a negative EMF voltage, i. e. one which has been phase-shifted through 180°, and in that these outputs are connected to the EMF selecting device (8) or the analog switches.

7. Control circuit as claimed in one of claims 1 to 6, characterised in that the analog computing circuit for detecting EMF is in the form of a differential circuit without any fixed potential relationship between the terminals of the measuring circuit and zero potential.

8. Control circuit as claimed in one of claims 1 to 6, characterised in that the analog computing circuit for detecting EMF comprises a fixed potential relation between the terminals of the measuring circuit and zero potential, the dropping resistor ($R_S$) of each motor phase winding being held at one end at zero potential.

9. Control circuit as claimed in one of claims 1 to 8, characterised in that the pulse shaper (10) connected to the integrator (10) is in the form of a comparator.

10. Control circuit as claimed in one of claims 1 to 9, characterised in that an attenuating circuit (11) having an integrator (12) which can be switched on and off by a combination of EMF voltage curves is provided for detecting a magnitude proportional to the energy of the rotor (16) and in that this magnitude serves to switch on a proportional attenuation, the integrator (12) being capable of being switched on and off by the zero-axis crossings of the EMF voltage or the EMF total voltage through the axis of the rotor end positions and in that the integrator content is a proportional measurement of the energy of the rotor at the first overshoot amplitude and in accordance with the integrator content after the first overshoot beyond the end position of the rotor at the moment of maximum overshoot amplitude, attenuation occurs, preferably by switching on the state of excitation which follows the end position and acts in the direction of further rotation and hence counter to the direction of backswing, for a time proportional to the integrator content.

11. Control circuit as claimed in claim 10, characterised in that the attenuating circuit (11) has control inputs (18, 17), on the one hand for detecting the EMF signal provided by the integrator (9) and in phase with the holding moment, and on the other hand for recognising the last switch-over of excitation within a process cycle and in that a control output (19) is connected to the logic circuit (4) or the PROM (5) in order to switch the state of excitation on to a state of excitation following the final state of excitation of a process cycle.

## Revendications

1. Circuit de commande pour un moteur pas à pas qui comporte au moins deux phases et un rotor induisant une tension, le circuit de commande (1) comprenant, pour le fonctionnement auto-synchronisé du moteur (2), un circuit de saisie des F.E.M. (forces électromotrices) (7), un dispositif de choix des F.E.M. comprenant des circuits analogique (8) permettant la commutation sur diverses courbes de tension des F.E.M. correspondant à chaque phase, un détecteur de passage par le zéro (10) pour engendrer des signaux de commande lors du passage par le zéro des courbes de tension des F.E.M., ainsi qu'un compteur (3) comprenant un circuit logique (4) qui lui est relié pour la commande des divers étages de commutation (6) des phases du moteur (2), caractérise par le fait que le dispositif de choix des F.E.M. (8) est réalisé pour commuter au choix des tensions de F.E.M. individuelles ou combinées provenant du dispositif de saisie des F.E.M. (7) sur un totalisateur (9), et par le fait que le totalisateur (9) est branché entre les sorties du dispositif de choix des F.E.M. (8) et le détecteur de passage par le zéro (10) pour former des courbes de somme ou, respectivement, de différence à partir des diverses courbes de tension des F.E.M., de telle sorte que des signaux de commande soient formés aussi bien aux positions de demi-pas du rotor (16) qu'à ses positions de pas entier, et qu'ils puissent être utilisés par le circuit de commande pour rendre optimal le couple du moteur.

2. Circuit de commande selon la revendication 1, caractérisé par le fait que les associations possibles entre les états d'excitation des enroulements de phase et les combinaisons des courbes de tension de F.E.M. sont enregistrées dans le circuit logique (4), et par le fait que le circuit logique (4), outre une liaison (A) avec les étages (6) d'excitation du moteur, comporte une sortie (B) pour la commande du dispositif de choix des F.E.M. (8), ainsi qu'une entrée de commande pour le choix d'une association.

3. Circuit de commande selon la revendication 2, caractérisé par le fait que le circuit logique (4) est réalisé sous la forme d'une mémoire morte programmable ou PROM (5).

4. Circuit de commande selon la revendication 1, caractérisé par le fait que la saisie des F.E.M. comporte comme circuit de saisie un réseau qui correspond à la relation:

$$U_{FEM} = i \cdot R + L \cdot \left(\frac{di}{dt}\right) - U$$

et qui se compose d'une résistance ($R_S$) montée en série pour déterminer le courant de phase et d'un circuit de calcul analogique comprenant seulement un amplificateur opérationnel (OP), une voie de mesure de la tension (21) conduisant à la première entrée de l'amplificateur opérationnel et destinée à déterminer la chute de tension ohmique et, en outre, une voie de calcul de la différentielle (22) destinée à déterminer la chute de tension inductive étant branchées entre l'enroulement et la résistance en série (jonction B), et une voie de mesure de la tension destinée à déterminer la tension du moteur étant branchée entre l'extrémité (jonction C) de l'enroulement de phase du moteur qui est opposée à la résistance en série ($R_S$) et l'autre entrée de l'amplificateur opérationnel.

5. Circuit de commande selon l'une des revendications 1 à 4, caractérisé par le fait que, pour former une tension de F.E.M. dont le signe est négatif par rapport au signal d'entrée, un inverseur ou un amplificateur-inverseur (24) est relié à la sortie du circuit de calcul destiné à fournir une tension de F.E.M. analogique.

6. Circuit de commande selon l'une des revendications 1 à 5, caractérisé par le fait que le dispositif de saisie des F.E.M. (7) comporte, pour chaque phase du moteur, une sortie pour une tension de F.E.M. associée à la phase du moteur et une autre sortie pour une tension de F.E.M. négativée, c'est-à-dire décalée en phase de 180°, et par le fait que ces sorties sont reliées au dispositif de choix des F.E.M. (8) ou, respectivement, aux commutateurs analogiques.

7. Circuit de commande selon l'une des revendications 1 à 6, caractérisé par le fait que le circuit de calcul analogique pour la saisie de la F.E.M. est réalisé sous la forme d'un circuit différentiel sans relation de potentiel fixe entre les points de jonction des voies de mesure et le potentiel zéro.

8. Circuit de commande selon l'une des revendications 1 à 6, caractérisé par le fait que le circuit de calcul analogique pour la saisie de la F.E.M. est réalisé avec une relation de potentiel fixe entre les points de jonction des voies de mesure et le potentiel zéro, la résistance en série ($R_S$) de chaque enroulement de phase du moteur étant au potentiel zéro sur l'un de ses côtés.

9. Circuit de commande selon l'une des revendications 1 à 8, caractérisé par le fait que le générateur d'impulsions (10) relié au totalisateur (9) est réalisé sous la forme d'un comparateur.

10. Circuit de commande selon l'une des revendications 1 à 9, caractérisé par le fait qu'un circuit d'amortissement (11) comprenant un intégrateur (12) pouvant être mis en circuit et hors circuit par une combinaison de courbes de tension de F.E.M. est prévu pour déterminer une grandeur proportionnelle au contenu en énergie du rotor, et par le fait que cette grandeur sert à la mise en circuit d'un amortissement proportionnel, l'intégrateur (12) pouvant être mis en circuit et hors circuit par les passages par le zéro de la tension de F.E.M. ou, respectivement, de la tension de F.E.M. additionnée sur l'axe de position finale du rotor, et par le fait que le contenu de l'intégrateur est une mesure proportionnelle pour le contenu en énergie du rotor pour la première amplitude de suroscillation, cependant qu'en fonction du contenu de l'intégrateur après la première suroscillation au-delà de la position finale du rotor, et au moment de la plus grande amplitude de suroscillation, il est prévu un amortissement, de préférence par commutation de l'état d'excitation qui suit la position finale et qui agit dans la direction de la poursuite de la rotation, et donc à l'inverse de la direction de l'oscillation en retour, et ce, pendant une durée proportionnelle au contenu de l'intégrateur.

11. Circuit de commande selon la revendication 10, caractérisé par le fait que le circuit d'amortissement (11) comporte des entrées de commande (18, 17), d'une part pour saisir le signal de F.E.M. formé par le totalisateur (9) et en phase avec le couple résistant, et, d'autre part, pour reconnaître la dernière commutation de l'état d'excitation à l'intérieur d'un cycle de déplacement, et par le fait qu'une sortie de commande (19) est reliée au circuit logique (4), ou, respectivement, à la PROM (5) pour continuer à commuter l'état d'excitation sur un état d'excitation qui suit le dernier état d'excitation d'un cycle de déplacement.

Fig.1

**Fig. 2**

$i_a$

Phase I

N S  16

ωt

Phase II

**Fig. 3**

$M_{hI}$

$M_{hII}$

$EMK_I$

$EMK_{II}$

Ruhelage Phase II

Ruhelage Phase I

ωt

**Fig. 4**

| Zähler (3) | → | Phasen-schaltstufe (6) | → | EMK-Erfassung (7) | → | Schritt-motor (2) |

3

*Fig.5*

Motorphase | Erfassungsschaltung

*Fig.6*

Motorphase | Erfassungsschaltung

*Fig.7*

Selbst erzeugte Pulse durch Ausdekodieren der EMK-Nulldurchgänge (pos → neg.)

Startpuls

Schalt-pulse

+I +II   −I +II   M   −I −II   +I −II   +I +II   M   Momente

E   E   EMK-Spannungen

+EMK₁   +EMK₂   −EMK₁   −EMK₂

Ruhepunkt
Σ Momente = 0

EMK Nulldurchgänge
positiv → negativ

0   1ms   2ms   3ms   4ms   Zeit-achse

Fig. 8

EP 0 151 296 B1

Fig.9

Fig. 10

EP 0 151 296 B1

Fig. 11

EMK-Spannungen.

Momente

+I-II  +I+II  -I+II  -I-II  +I-II  +I+II  -I+II

+1+2  -1+2  -1-2  +1-2  +1+2  -1+2

+1  +2  -1  -2  +1  +2

E

M

max. neg. Moment-abgabe bei hohen Geschwindigk. | - bei mittleren Geschwindigk. | - bei niedrigen Geschwindigkeiten

| Momente | +I -II | +I +II | -I +II | -I -II | +I -II |
| --- | --- | --- | --- | --- | --- |
| EMk's | +1 | -1 +2 | -2 | +1 | +2 |

EP 0 151 296 B1

Verzögerungssignal

Fig. 12

Verzögerungssignal

Fig. 13

Haltemoment Phase I + Phase II

EMK$_1$ + EMK$_2$

*Fig.14*

$\varphi$

$t_o$

20

$t_1$

EMK$_1$ + EMK$_2$ = f (t)

$\varphi = \varphi$ (t)

*Fig.15*

t

$t_i$

Erregungszustand x + 1

Erregungszustand x

$\varphi = \varphi$ (t)

*Fig.16*

t$_0$    t$_1$

EMK$_I$ + EMK$_{II}$ = f (t) –